# FASCICULE DE BREVET EUROPEEN

(11) **EP 0 552 099 B1**
(45) Date de publication et mention de la délivrance du brevet: **20.03.1996**
(21) Numéro de dépôt: 93400072.0
(22) Date de dépôt: 13.01.1993
(51) Int. Cl.: H04N 7/00, H04N 11/08

(54) **Codeur multicomposantes x-paquets et décodeur correspondant**
Mehrkomponenten X-Paketkodierer und Dekodierer dafür
Multicomponent X-packet encoder and decoder therefor

(30) Priorité: 16.01.1992 FR 9200408
(43) Date de publication de la demande: 21.07.1993
(73) Titulaire: MATRA COMMUNICATION, F-29101 Quimper Cédex (FR)
(72) Inventeur: Mary, Jean, F-91400 Orsay (FR); Masson, Jean-Michel, F-91680 Courson Monteloup (FR)
(74) Mandataire: Fort, Jacques

(56) Documents cités:
- EP-A- 0 461 978
- SMPTE JOURNAL. vol. 97, no. 8, Août 1988, WHITE PLAINS pages 606 - 612 DALTON ET AL. 'Communications between analog component production centers'
- SYMPOSIUM RECORD BROADCAST SESSIONS 17 Juin 1989, MONTREUX pages 701 - 707 HASCOET ET AL. 'T-MAC: Contribution links with analog component quality'

## Description

La présente invention a pour objet un codeur multicomposantes permettant de constituer un multiplex que l'on peut qualifier de X-PAQUETS (ce terme comprenant les structures dites D2 MAC, DMAC, D2 plein temps, D plein temps et HD-MAC), chaque composante comprenant une séquence de paquets et les paquets étant répartis en salves successives occupant chacune une fraction déterminée d'une ligne de trame de télévision, ladite fraction pouvant aller de 0/1 à 1/1, ainsi qu'un décodeur multicomposantes correspondant. On désignera par composantes numériques toutes les données d'une source identifiées par une fenêtre dans la trame: une séquence de salves est un exemple de composante numérique .

Un dispositif de détection de salves de données numériques récurrentes (apparaissant dans des "fenêtres" temporelles) dans un signal de télévision de type MAC est décrit dans le document EP-A-0 461 978.

L'invention trouve une application particulièrement importante dans la constitution d'un codeur permettant de constituer un multiplex numérique du type D2 ou D plein temps, la fraction de chaque composante pouvant aller jusqu'à la totalité du temps alloué aux lignes actives ; elle trouve corrélativement une application importante dans la constitution d'un décodeur, notamment communautaire, permettant de traiter un tel signal diffusé et de le répartir entre des lignes d'abonnés.

Un tel multiplex, et notamment un multiplex plein temps, doit être adaptable aux besoins du diffuseur et de ses fournisseurs de programmes. Or ces besoins peuvent évoluer. Le nombre de sources à diffuser peut augmenter, ce qui accroît la complexité. Et une utilisation optimale des ressources exige que l'on puisse modifier facilement les fractions du temps allouées aux différentes sources.

L'invention vise notamment à fournir un codeur de constitution telle qu'elle permette de façon simple une évolution vers une complexité accrue pour accepter davantage de sources, par simple adjonction de composants, sans modifications d'instructions mémorisées et sans changement du matériel préexistant.

L'invention propose dans ce but un codeur modulaire X-paquets comprenant :
. plusieurs blocs ayant chacun au moins un codeur de paquets muni d'une mémoire tampon de stockage de données numériques provenant d'une source et un codeur de répartition de paquets en salves de durée ajustable et au plus égale à la durée d'une ligne de télévision
. et un ensemble codeur de base contenant un dispositif programmable d'affectation d'une fenêtre déterminée de la trame de télévision à chaque bloc et des moyens pour appeler une salve de longueur correspondant à la largeur dans la fenêtre qui est affectée par le dispositif programmable, à partir du codeur de salve du bloc respectif, à chaque début de la fenêtre dans une ligne.

Par commodité, on appellera "salve" l'ensemble des données appelées d'un même bloc pour une seule ligne et on désignera par "séquence de salves" l'ensemble des salves émises à partir du codeur de salves d'un bloc dans toute la fenêtre affectée à ce codeur. On désignera par composantes numériques toutes les données d'une source identifiées par une fenêtre dans la trame (une séquence de salves est un exemple de composante numérique).

Les données numériques peuvent représenter une information de nature quelconque, telle que son, vidéo, signaux de test, données de télétexte, etc.

Un décodeur peut avoir une constitution qu'on peut considérer comme symétrique de celle du codeur défini ci-dessus.

L'invention vise également à fournir un codeur (ou un décodeur) du genre ci-dessus défini permettant une reprogrammation facile, pouvant aller jusqu'à une modification des fenêtres à chaque trame. Pour cela, l'invention propose un codeur (ou un décodeur) comportant un processeur permettant de modifier les salves à partir de données d'entrée constituées par :
- l'identification des numéros d'échantillons (ou de bits) où un changement de fenêtre, donc une commutation de blocs, a lieu, dans quelque ligne que ce soit ;
- l'identification des lignes dans lesquelles il y a modification de la répartition entre blocs.

Cette solution permet une reconfiguration rapide et n'exige que la mémorisation d'un faible volume d'informations, comparée à la solution qui consisterait à mémoriser la répartition en salves pour toutes les lignes de la trame de télévision.

L'invention sera mieux comprise à la lecture de la description qui suit de codeurs et décodeurs qui en constituent des modes particuliers de réalisation, donnés à titre d'exemples non limitatifs. La description se réfère aux dessins qui l'accompagnent, dans lesquels :
- la figure 1 montre une constitution possible de trame de télévision de type D2 MAC/paquets, à transmission plein temps de trois séquences de salves ;
- la figure 2 est un schéma de principe d'un codeur multicomposantes utilisable pour constituer une trame du genre montrée en figure 1 ; et
- la figure 3 est un synoptique montrant une constitution avantageuse de codeur de base correspondant au schéma de la figure 2.

L'invention sera maintenant décrite dans son application à la transmission numérique plein temps dans une trame ayant, conformément à la norme D2 MAC/paquets, 625 lignes, la ligne 625 étant destinée à la transmission d'une messagerie. Mais, alors que pour la diffusion normale de programmes de télévision en D2 MAC, chaque ligne active comporte, en plus de la partie analogique MAC, une salve numérique de 99 bits, chacune des lignes comportera uniquement, en transmission ou diffusion numérique plein temps, 1 296 échantillons, soit 648 bits codés en duobinaire. Les données provenant d'une même source sont, la plupart du temps, transmises en paquets de 751 bits, répartis en salves dont l'affectation peut être identifiée par des données incluses dans la ligne 625.

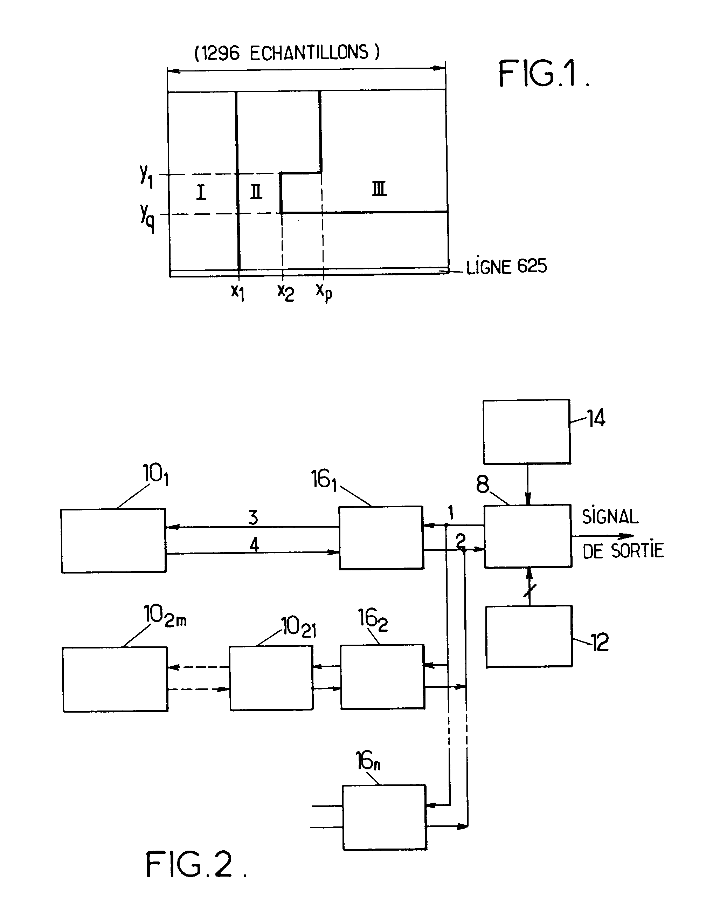

Dans l'exemple donné en figure 1, la trame est constituée de trois séquences de salves occupant trois fenêtres, désignées par I, II et III. Chaque ligne contient de une à trois salves. Chaque numéro d'échantillon pour lequel il y a, dans une ligne quelconque de la trame, passage d'une salve à une autre, sera appelé par la suite "numéro d'échantillon caractéristique".

Quel que soit le nombre de séquences de salves, le codeur multicomposantes destiné à constituer la trame comporte un ensemble codeur de base, qui constitue l'élément maître du codeur, cet ensemble codeur de base est seul utilisé lorsqu'il y a à transmettre ou à diffuser une seule séquence de salves, constituée à partir de paquets qui, dans le cas représenté en figure 1, proviennent d'un seul codeur de paquets 10₁.

Le codeur de base 8 reçoit des consignes d'émission d'un frontal 12 qui, lui-même, comporte une mémoire contenant la structure de trame à constituer. Ces consignes seront exploitées par un processeur 14.

Le codeur de base 8, qui constitue un ensemble de base avec le frontal 12, est destiné à émettre vers les codeurs de salves 16₁, 16₂, ... 16ₙ, qui sont en nombre variable, des demandes de salves contenant chacun un nombre x de bits qui dépend de la fenêtre (I, II et III sur la figure 1) affectée à un bloc auquel appartient le codeur de salves. Chaque codeur de salves constitue l'organe de sortie du bloc correspondant.

Le codeur de salves qui est appelé (signal 1 sur la figure 2) répond en envoyant x bits à insérer (signal 2) au codeur de base 8. Le codeur de base 8 est prévu pour ajouter, dans chaque ligne et/ou dans chaque trame, des signaux de synchronisation et de retour trame conformes à la norme utilisée et pour ajouter, en ligne 625, les indications fournies par le frontal 12. En D- paquets plein temps, il est ainsi possible d'identifier jusqu'à 12 séquences de salves, c'est-à-dire 12 composantes numériques et 12 fenêtres.

Le premier bloc montré en figure 2 comporte un seul codeur de paquets 10₁ qui fonctionne en esclave du codeur de salves correspondant 16₁. Il est prévu pour émettre un paquet de bits (signal 4) en réponse à une demande d'émission (signal 3) provenant du codeur de salves 16₁. Le codeur de paquets 10₁ reçoit lui-même les données à transmettre d'une source. Il possède une mémoire d'entrée organisée en file d'attente ou FIFO permettant de formater les données en paquets et une mémoire de sortie permettant d'envoyer vers le codeur de salves les paquets constitués suivant le nombre x de bits demandé, constituant une salve.

Le codeur multicomposantes comporte autant de codeurs de salves qu'il y a de séquences de salves, c'est-à-dire de fenêtres (trois dans le cas de la figure 1).

Un bloc peut comporter plusieurs codeurs de paquets, affectés chacun à une source. Par exemple le second bloc illustré comprend des codeurs de paquets 10₂₁, ..., 10₂ₘ. L'association peut être en cascade, chaque codeur de paquets étant esclave de celui qui le précède et maître de celui qui le suit et chaque demande de paquet' étant transmise jusqu'à ce qu'elle rencontre un codeur ayant des paquets à émettre. Le montage peut également être tel que ce soit le codeur qui possède la source de plus forte priorité qui émet un paquet à la suite d'une demande, par exemple en mettant en oeuvre le procédé décrit dans la demande de brevet FR N° 91 07 443.

L'invention propose également un décodeur permettant de récupérer la totalité des paquets inclus dans le multiplex, ayant une constitution symétrique de celle du codeur. Pour cette raison, il sera décrit en faisant de nouveau référence à la figure 2. Mais cette fois les références 8, 16 et 10 désigneront respectivement un décodeur de base (qui est toujours présent), des décodeurs de salves, en nombre égal à celui des composantes numériques ou des fenêtres, et des décodeurs de paquets.

Le décodeur de base constitue encore l'élément maître. Il émet vers les décodeurs de salves (signal 1 sur la figure 2) les salves à traiter et ces appareils répondent en envoyant un signal d'acquittement (signal 2). Le décodeur de base 8 distribue les différentes salves en fonction de la constitution du multiplex numérique d'entrée qu'il reçoit, (décrite dans la ligne 625).

Chaque décodeur de salves fonctionne en esclave du décodeur de base et en maître du décodeur de paquets (ou des décodeurs de paquets) rattachés. Il constitue des paquets au fur et à mesure qu'il reçoit les données de la salve qu'il gère et les envoie (signal 3) aux décodeurs de paquets. En réponse au paquet qu'il reçoit, le décodeur de paquets renvoie au décodeur de salves un signal d'acquittement (signal 4). Une mémoire tampon est prévue en sortie du décodeur de salves (ou en entrée du décodeur de paquets) pour permettre au décodeur de paquets d'intervenir uniquement sur des paquets complets, reconstitués à partir de plusieurs salves appartenant à la même séquence de salves.

Il est préférable de prévoir la mémoire en sortie du décodeur de salves : ainsi chaque paquet émis par le décodeur de salves est accompagné d'une adresse, ce qui permet, lorsqu'il y a plusieurs décodeurs de paquets, de déterminer si le paquet lui est affecté et doit être traité, ou au contraire doit être transmise au décodeur suivant.

Le dialogue entre deux décodeurs de paquets (associés à un même décodeur de salves) peut être identique au dialogue entre le décodeur de salves et le premier décodeur de paquets.

Comme le montre la figure 1, l'agencement des fenêtres ou composantes numériques dans la trame donnée peut varier d'une ligne à une autre. De plus, il est en général nécessaire de modifier périodiquement le découpage en fenêtres, à la limite à chaque trame.

L'agencement peut être défini en mémorisant, pour chaque ligne, les échantillons de passage d'une composante numérique à une autre. Et dans ce cas la capacité de mémoire requise devient importante lorsque la configuration est complexe.

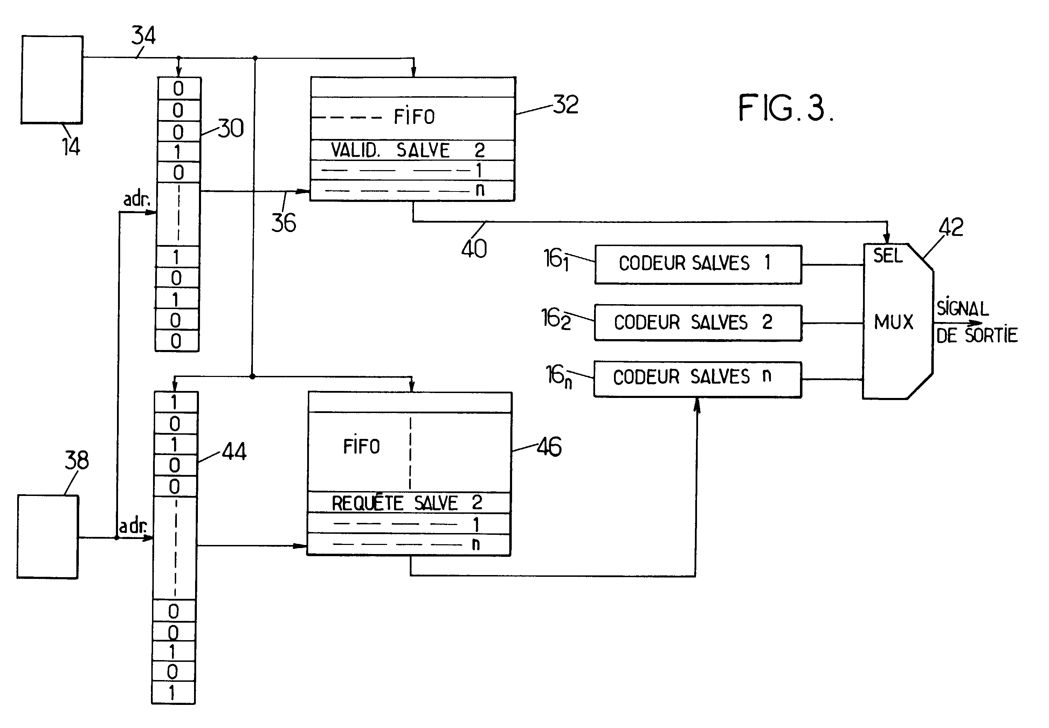

Dans un mode avantageux de réalisation de l'invention, le codeur de base présente la constitution de principe montrée en figure 3 et constitue un processeur qui permet de gérer le fonctionnement du codeur de façon à autoriser une reconfiguration en temps réel en n'exigeant qu'un volume de mémoire réduit et un processeur simple d'émission de signaux de contrôle.

Le fonctionnement du codeur implique qu'on définisse dans la trame des numéros d'échantillons caractéristiques (x₀, x₁, ... xₚ) où une commutation de composantes (c'est-à -dire par exemple un changement de salves) a lieu dans une ligne quelconque, et des "numéros de lignes caractéristiques" y₁, ..., y_{q} par exemple où la répartition des salves change.

On peut alors, pour chaque ligne caractéristique, mémoriser la succession des codes caractéristiques chacun d'une composante numérique, ce qui permet de reconstituer la répartition dans chaque ligne puisque :
- à chaque ligne, le code peut changer à chaque échantillon caractéristique,
- la répartition mémorisée pour une ligne caractéristique reste inchangée jusqu'à la ligne caractéristique suivante.

Le codeur de base comportera en général deux branches de constitution comparable. Une des branches est destinée à sélectionner la composante numérique à émettre dans la trame. La seconde branche est destinée à générer des codes représentant des requêtes pour les composantes numériques.

Dans le mode de réalisation illustré en figure 3, la première branche comporte une mémoire vive 30 destinée à stocker les numéros d'échantillons caractéristiques x₁, ..., xₚ. Cette mémoire a avantageusement un nombre de positions binaires adressables égal à celui des échantillons dans chaque ligne (par exemple 1 296 en plein temps). Les positions en mémoire vive 30 dont l'adresse correspond aux numéros d'échantillon caractéristiques sont mises dans un état binaire actif (1 par exemple) par écriture à partir du bus 34 de l'ensemble processeur-frontal. La branche comporte une seconde mémoire 32, organisée en file d'attente ou FIFO 32, dans laquelle les codes d'identification des composantes numériques sont mémorisées à partir du bus, dans le même ordre que dans la trame, et ce uniquement pour une ligne caractéristique à la fois. Les codes donnés à titre d'exemple sur la figure 3 sont ceux de validation de salve. Une entrée 36 de la file d'attente 32 reçoit un signal de la mémoire vive 30 lorsque cette dernière est adressée en lecture par le numéro d'un échantillon caractéristique, provenant d'un compteur d'échantillon 38 remis à zéro au début de chaque ligne. Chaque signal fait avancer la file 32 d'une position et provoque l'émission, sur la sortie 40, du code de sélection d'une composante numérique. Ce code est appliqué sur l'entrée de sélection d'un multiplexeur 42.

La file d'attente 32 est montée de façon à se reboucler sur tous les codes de la ligne caractéristique, jusqu'à l'arrivée d'une nouvelle ligne caractéristique.

A chaque ligne caractéristique, le bus 34 charge une nouvelle répartition. Dans la pratique, la file d'attente est avantageusement constituée et commandée de façon à contenir toujours en réserve les codes de la prochaine ligne à parvenir.

La seconde branche comporte une mémoire vive 44, de constitution similaire à celle de la mémoire vive 30. Dans cette mémoire sont chargées par l'intermédiaire du bus 34, les lignes caractéristiques des codes de requête de composantes numériques. Elle comprend aussi une file d'attente 46 dans laquelle le bus du processeur 34 charge des codes de requête, identifiant par exemple le codeur de salves qui doit fournir une salve. La sortie de chaque codeur de salves attaque les entrées de données du multiplexeur 42.

## Revendications

1. Codeur multicomposantes, chaque composante comprenant une séquence de paquets et les paquets étant répartis en salves successives occupant chacune une fraction déterminée d'une ligne de trame de télévision, caractérisé en ce qu'il comprend :
- plusieurs blocs ayant chacun au moins un codeur de paquets (10₁, ...) muni d'une mémoire tampon de stockage de données numériques provenant d'une source et un codeur (16₁, 16₂, ... 16ₙ) de répartition de paquets en salves de durée ajustable et au plus égale à la durée d'une ligne de télévision ;
- et un ensemble codeur de base contenant un dispositif programmable d'affectation d'une fenêtre déterminée de la trame de télévision à chaque bloc et des moyens pour appeler une salve de longueur correspondant à la largeur dans la fenêtre qui est affectée par le dispositif programmable, à partir du codeur de salves du bloc respectif, à chaque début de la fenêtre dans une ligne.

2. Codeur selon la revendication 1, caractérisé en ce que certains des blocs comprennent plusieurs codeurs de paquets (10₂₁, ..., 10₂ₘ), chaque codeur étant prévu pour présenter un ordre de priorité et le codeur de salves étant prévu pour que ce soit le codeur de paquets ayant la plus forte priorité qui émette des données vers le codeur de salves.

3. Codeur selon la revendication 1 ou 2, caractérisé en ce que le codeur de base (8) est prévu pour ajouter, dans chaque ligne et/ou dans chaque trame, des signaux de synchronisation et de retour trame conformes à une norme X/paquets et pour ajouter, en ligne 625, des indications d'identification de salves.

4. Décodeur multicomposantes permettant de fractionner un multiplex constitué à partir de sources fournissant chacune une séquence de paquets qui sont répartis en salves successives occupant chacune une fraction déterminée d'une ligne de trame de télévision, caractérisé en ce qu'il comprend :
- plusieurs blocs ayant chacun au moins un décodeur de salves, et
- un ensemble décodeur de base contenant une mémoire programmable d'affectation d'une fenêtre déterminée de la trame de télévision à chaque bloc, et des moyens pour émettre sur des sorties différentes les salves identifiées dans la trame de télévision,
- et également caractérisé en ce que chaque décodeur de salves fonctionne en esclave du décodeur de base et en maître d'au moins un décodeur de paquets qui lui sont rattachés.

5. Codeur selon l'une quelconque des revendications 1 a 3, caractérisée en ce qu'il comprend un processeur permettant de modifier l'agencement des salves à partir de données d'entrée constituées par :
- l'identification des numéros d'échantillons caractéristiques où une commutation de blocs a lieu, dans quelque ligne que ce soit,
- l'identification des numéros de lignes caractéristiques, dans lesquels il y a modification de la répartition entre blocs.

6. Codeur selon la revendication 5, caractérisé en ce que le codeur de base comporte deux branches similaires dont une sélectionne la composante numérique pour laquelle une salve doit être émise et la seconde génère des codes représentant des demandes de salves, destinées aux codeurs de salves appropriés.

7. Codeur selon la revendication 6, caractérisé en ce que la première branche comporte une mémoire vive (30) de stockage de numéros d'échantillons caractéristiques, ayant un nombre de positions binaires adressables égal à celui des échantillons dans chaque ligne et une file d'attente (32) dans laquelle des codes d'identification des composantes numériques sont mémorisés dans l'ordre des salves à partir d'un processeur extérieur, uniquement pour une ligne caractéristique à la fois, la file d'attente recevant un signal de sortie de la mémoire vive (30) lorsque cette dernière reçoit, en lecture, l'adresse du numéro d'un échantillon caractéristique, provenant d'un compteur d'échantillons.

8. Codeur selon la revendication 6, caractérisé en ce que la seconde branche comporte une mémoire vive (44) dans laquelle sont chargés, par l'intermédiaire d'un' bus (34), les numéros d'échantillons caractéristiques de codes de requête de salves et une file d'attente (46) dans laquelle le bus du processeur (34) charge des codes de requêtes identifiant le codeur de salves qui doit fournir une salve.

## Patentansprüche

1. Mehrkomponentenkodierer, wobei jede Komponente eine Sequenz von Paketen umfaßt und die Pakete auf aufeinanderfolgende, jeweils einen bestimmten Anteil einer Fernsehteilbildzeile einnehmende Datenbursts verteilt sind, dadurch gekennzeichnet, daß er umfaßt:
- mehrere Blöcke mit jeweils wenigstens einem Paketekodierer (10₁, ...), welcher mit einem Pufferspeicher zum Speichern von von einer Quelle kommenden digitalen Daten ausgestattet ist, und mit einem Kodierer (16₁, 16₂ ..., 16ₙ) zur Verteilung der Pakete auf Datenbursts einstellbarer Dauer, welche höchstens gleich der Dauer einer Fernsehzeile ist;
- und ein Basiskodiererensemble, welches eine programmierbare Vorrichtung zur Zuordnung eines bestimmten Fensters des Fernsehteilbilds zu jedem Block umfaßt und Mittel zum Abrufen eines Datenbursts einer Länge, welche der Breite in dem Fenster entspricht, welches durch die programmierbare Vorrichtung ausgehend von dem Kodierer der Datenbursts des entsprechenden Blocks jedem Anfang des Fensters in einer Zeile zugeordnet ist.

2. Kodierer nach Anspruch 1, dadurch gekennzeichnet, daß bestimmte der Blöcke mehrere Paketekodierer (10₂₁, ...., 10₂ₘ) umfassen, wobei jeder Kodierer dazu vorgesehen ist, eine Prioritätsreihenfolge zu repräsentieren, und der Datenburstkodierer dazu vorgesehen ist, daß dies der Paketekodierer mit der höchsten Priorität ist, welcher die Daten zu dem Datenburstkodierer sendet.

3. Kodierer nach Anspruch 1 oder 2, dadurch gekennzeichnet, daß der Basiskodierer (8) dazu vorgesehen ist, um zu jeder Zeile und/oder zu jedem Teilbild Synchronisierungs- und Teilbildrücksprungsignale hinzuzufügen, welche einer X/Pakete-Norm entsprechen, und um in Zeile 625 Angaben zur Datenburstidentifizierung hinzuzufügen.

4. Mehrkomponentendekodierer, welcher die Aufteilung eines Multiplex ermöglicht, welches ausgehend von Quellen gebildet ist, die jeweils eine Sequenz von Paketen liefern, welche auf aufeinanderfolgende, jeweils einen bestimmten Anteil einer Fernsehteilbildzeile einnehmende Datenbursts verteilt sind, dadurch gekennzeichnet, daß er umfaßt:
- mehrere Blöcke mit jeweils wenigstens einem Datenburstdekodierer und
- ein Basisdekodiererensemble, welches einen programmierbaren Speicher zur Zuordnung eines bestimmten Fensters des Fernsehteilbilds zu jedem Block umfaßt und Mittel, um auf unterschiedlichen Ausgängen die in dem Fernsehteilbild identifizierten Datenbursts auszusenden,
- und auch dadurch gekennzeichnet ist, daß jeder Datenburstdekodierer als slave des Basisdekodierers und als master von wenigstens einem zu ihm gehörenden Paketedekodierer arbeitet.

5. Kodierer nach einem der Ansprüche 1 bis 3, dadurch gekennzeichnet, daß er einen Prozessor umfaßt, welcher es ermöglicht, die Anordnung der Datenbursts ausgehend von den Eingangsdaten zu modifizieren, welche gebildet sind von:
- der Identifizierung der Nummern der charakteristischen Abtastwerte, bei denen eine Kommutation von Blöcken stattfindet, in welcher Zeile auch immer,
- die Identifizierung der Nummern der charakteristischen Zeilen, in welchen es eine Modifizierung der Verteilung zwischen Blöcken gibt.

6. Kodierer nach Anspruch 5, dadurch gekennzeichnet, daß der Basiskodierer zwei ähnliche Zweige umfaßt, von denen einer die digitale Komponente auswählt, für welche ein Datenburst auszusenden ist, und der zweite die Kodes erzeugt, welche Datenburstanfragen darstellen, welche für die geeigneten Datenburstkodierer bestimmt sind.

7. Kodierer nach Anspruch 6, dadurch gekennzeichnet, daß der erste Zweig einen Arbeitsspeicher (30) zum Speichern der Nummern der charakteristischen Abtastwerte umfaßt, welcher eine Anzahl adressierbarer binärer Positionen gleich der Anzahl der Abtastwerte in jeder Zeile aufweist, und eine Warteschlange (32), in welcher die Kodes zur Identifizierung der digitalen Komponenten in der Reihenfolge der Datenbursts ausgehend von einem externen Prozessor nur für eine charakteristische Zeile auf einmal gespeichert sind, wobei die Warteschlange ein Ausgangssignal des Arbeitsspeichers (30) empfängt, wenn dieser letztere beim Lesen die Adresse der Nummer eines charakteristischen Abtastwerts empfängt, welche von einem Abtastwertzähler kommt.

8. Kodierer nach Anspruch 6, dadurch gekennzeichnet, daß der zweite Zweig einen Arbeitsspeicher (44) umfaßt, in welchen mittels eines Busses (34) die Nummern der charakteristischen Abtastwerte von Datenburstanforderungskodes geladen werden, und eine Warteschlange (46), in welche der Bus (34) des Prozessors die Anforderungskodes lädt, welche den Datenburstkodierer identifiziern, der einen Datenburst liefern muß.

## Claims

1. A multi-component coder, each component comprising a sequence of packets and the packets being divided into successive bursts each occupying a given fraction of a line of a television field, the coder being characterised in that it comprises:
- a number of units each having at least one packets coder (10₁, ...) provided with a buffer memory for storage of digital data coming from a source, and a coder (16₁, 16₂, ... 16ₙ) for distributing packets in bursts of adjustable duration not exceeding the duration of a television line, and
- a base coder assembly containing a programmable device for allocating a given window of the television frame to each unit and means for calling a burst having a length corresponding to the width in the window allocated by the programmable device, starting from the bursts coder in the respective unit, to each beginning of the window in a line.

2. A coder according to claim 1, characterised in that some units comprise a number of packets coders (10₂₁, ..., 10₂ₙ), each coder being adapted to have a priority order and the bursts coder being designed so that the packets coder having the highest priority outputs data to the bursts coder.

3. A coder according to claim 1 or 2, characterised in that the base coder (8) is adapted to add synchronisation signals and return of frame signals in accordance with an X/packets standard in each line and/or in each frame and to add identification data of the bursts in line 625.

4. A multi-component decoder for dividing a multiplex made up from sources each supplying a sequence of packets distributed in successive bursts each occupying a given fraction of a line of a television field, characterised in that it comprises:
- a number of units each having at least one bursts decoder and
- a base decoder assembly containing a programmable memory for allocating a given window of the television frame to each unit, and means whereby the bursts identified in the television frame are output at different outputs, and also characterised in that each bursts decoder operates under the control of the base decoder and controls at least one packets decoder connected thereto.

5. A coder according according to any of claims 1 to 3, characterised in that it comprises a processor for modifying the arrangement of the bursts on the basis of input data comprising
- identification of the numbers of characteristic samples where switching of units occurs, in whatever line, and
- identification of the numbers of characteristic lines in which the distribution between units is modified.

6. A coder according to claim 5, characterised in that the base coder comprises two similar arms, one of which selects the digital component for which a burst is to be output and the second of which generates codes representing requests for bursts directed to suitable bursts coders.

7. A coder according to claim 6, characterised in that the first arm comprises a RAM (30) for storage of characteristic sample numbers, comprising a number of addressable binary locations equal to the number of samples in each line and a waiting file (32) in which the identification codes of the digital components are stored in the order of the bursts from an external processor, for one characteristic line at a time only, the waiting file receiving an output signal from the RAM (30) when the RAM receives, during reading, the address of the number of a characteristic sample coming from a sample counter.

8. A coder according to claim 6, characterised in that the second arm comprises a RAM (44) into which the numbers of characteristic samples of codes for request of samples are loaded via a bus (34) and a waiting file (46) into which the processor bus (34) loads request codes identifying that bursts coder which is to provide a burst.
